Europäisches Patentamt

European Patent Office

Office européen des brevets

(11) Veröffentlichungsnummer: **0 385 942**
**A2**

## EUROPÄISCHE PATENTANMELDUNG

(21) Anmeldenummer: 90810131.4

(51) Int. Cl.5: **B65D 35/08, B29C 49/04**

(22) Anmeldetag: 22.02.90

(30) Priorität: 27.02.89 CH 737/89

(43) Veröffentlichungstag der Anmeldung:
05.09.90 Patentblatt 90/36

(84) Benannte Vertragsstaaten:
**AT BE CH DE DK ES FR GB GR IT LI LU NL SE**

(71) Anmelder: **SOPLAR SA**
**Transportstrasse 3**
**CH-9450 Altstätten(CH)**

(72) Erfinder: **Lehner, Alwin**
**Allmendstrasse 81**
**A-6971 Hard(AT)**
Erfinder: **Karg, Peter**
**Fähnernstrasse 1**
**CH-9434 Au(CH)**

(74) Vertreter: **Riederer, Conrad A., Dr.**
**Bahnhofstrasse 10**
**CH-7310 Bad Ragaz(CH)**

(54) Im Extrusionsblasverfahren hergestellter Hohlkörper, insbesondere Flasche.

(57) Der im Extrusionsblasverfahren hergestellte Hohlkörper aus Kunststoff weist einen Abschnitt (11) aus relativ hartem Material und einem Abschnitt (13) aus relativ weichem Material auf. Der so hergestellte Hohlkörper, z.B. eine Flasche, weist eine grosse Formstabilität auf. Trotzdem lässt sich aus einem solchen Formkörper das Füllmaterial, z.B. eine pasteuse Masse, problemlos herauspressen, weil der Abschnitt (13) leicht verformbar ist.

Fig. 1

EP 0 385 942 A2

## Im Extrusionsblasverfahren hergestellter Hohlkörper, insbesondere Flasche

Die Erfindung betrifft im Extrusionsverfahren hergestellte Hohlkörper, insbesondere Flaschen aus Kunststoff. Flaschen aus Kunststoff haben ein ausserordentlich grosses Anwendungsgebiet gefunden. Sie können beispielsweise auch dort verwendet werden, wo sich Glasflaschen nicht oder nur sehr schlecht eignen, z.B. für pasteuse Materialien. Da Kunststoffflaschen je nach der Art des verwendeten Kunststoffes eine mehr oder weniger grosse Elastizität aufweisen, ist es möglich, pastenförmiges Füllgut durch Zusammendrücken der Flasche herauszupressen. Je weicher nun das Kunststoffmaterial ist, desto leichter kann die Flasche zusammengepresst werden. Je weicher aber das für die Flasche verwendete Material ist, desto geringer ist auch die Stabilität der Flasche. Nachteilig ist auch, dass die Flasche beim Zusammendrücken in eine unschöne und unstabile Form gebracht werden kann. Dadurch werden der Materialwahl Grenzen gesetzt. Meist wird nach einem Kompromiss zwischen Stabilität und Zusammendrückbarkeit gesucht. Dies hat den Nachteil, dass ein relativ grosser Kraftaufwand zum Herausdrücken des Füllmaterials notwendig ist und eine praktisch vollständige Entleerung der Flasche unmöglich ist.

Es ist daher Aufgabe der vorliegenden Erfindung einen Hohlkörper, insbesondere eine Flasche der eingangs erwähnten Art zu schaffen, bei welchem die angeführten Nachteile mindestens teilweise vermieden werden.

Erfindungsgemäss wird dies dadurch erreicht, dass der Hohlkörper aus mindestens einem längsverlaufenden Abschnitt aus einem ersten Material und mindestens einem längsverlaufenden Abschnitt aus einem zweiten Material besteht. Durch diese Verwendung von verschiedenartigen Materialien können dem Hohlkörper besonders vorteilhafte Eigenschaften verliehen werden. So hat die Verwendung von längsverlaufenden Abschnitten aus relativ hartem und relativ weichem Material den Vorteil, dass dem Hohlkörper durch den harten und somit steifen Abschnitt eine grosse Formstabilität gegeben wird, andererseits aber der weiche Abschnitt z.B. so weich ist, dass sich das Füllgut problemlos herauspressen lässt.

Vorteilhaft sind zwei praktisch gleichgrosse Abschnitte vorgesehen, die einander gegenüber liegen. Solche Hohlkörper können äusserst rationell unter Zuhilfenahme eines Extrusionskopfes gemäss der schweizerischen Patentanmeldung 4 562/88-2 hergestellt werden.

Die Abschnitte grenzen vorteilhaft bei der Formtrennebene aneinander an. Die Blasform besteht normalerweise aus zwei Formteilen. Die Formtrennebene ist also die Ebene, wo die Formteile der geschlossenen Form aneinandergrenzen. Die Formtrennebene ist an den im Extrusionsblasverfahren hergestellten Hohlkörpern als sogenannte Naht feststellbar. Diese Naht kann das Aussehen des Hohlkörpers etwas beeinträchtigen. Wird nun aber die Grenze der beiden Abschnitte, wie vorgeschlagen, bei der Formtrennebene gesetzt, so ist die sogenannte Naht praktisch unsichtbar.

Es ist auch möglich, eine Vielzahl von Abschnitten aus erstem und zweitem Material, z.B. relativ hartem und relativ weichem Material, vorzusehen. Dadurch ergeben sich viele Gestaltungsmöglichkeiten für Flaschen, Tuben und andere im Extrusionsblasverfahren hergestellte Hohlkörper.

In vielen Fällen ist es vorteilhaft, wenn im Querschnitt die Abschnitte aus relativ hartem Material schmäler sind als die Abschnitte aus relativ weichem Material. Die breiten Abschnitte aus weichem Material ermöglichen dann ein problemloses Zusammendrücken; die relativ schmalen Abschnitte aus hartem Material wirken dabei als Verstärkungsrippen und gewährleisten so eine grosse Formstabilität des Hohlkörpers.

Grundsätzlich kann der Hohlkörper einen beliebigen Querschnitt aufweisen. Vorteilhaft ist aber ein ovaler Querschnitt, denn ein solcher erleichtert das Herauspressen des Füllgutes. Möglich ist aber auch beispielsweise ein runder Querschnitt des Hohlkörpers. Bei der Verwendung eines runden Querschnitts ist der Umfang inbezug auf die umschlossene Querschnittsfläche am geringsten, so dass sich auch für ein vorbestimmtes Füllvolumen des Hohlkörpers der geringste Materialverbrauch für die Herstellung des Hohlkörpers ergibt.

Ausführungsbeispiele der Erfindung werden nun unter Bezugnahme auf die Zeichnung beschrieben. Es zeigt:

Fig. 1 Ein erstes Ausführungsbeispiel des erfindungsgemässen Hohlkörpers im Querschnitt, wobei zwei praktisch gleichgrosse Abschnitte aus einem ersten und einem zweiten Material vorgesehen sind, die einander gegenüberliegen,

Fig. 2 ein zweites Ausführungsbeispiel mit zwei einander gegenüberliegenden harten Abschnitten, die auf beiden Seiten durch einen weichen Abschnitt miteinander verbunden sind,

Fig. 3 ein drittes Ausführungsbeispiel mit einer Vielzahl von harten und weichen Abschnitten und

Fig. 4 ein viertes Ausführungsbeispiel mit einer Vielzahl von rippenförmigen harten Abschnitten.

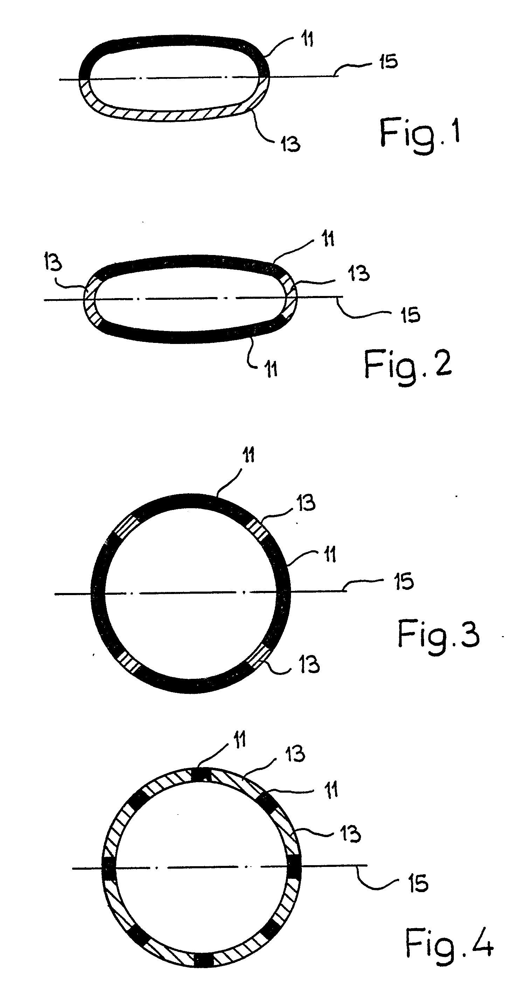

Der Hohlkörper, z.B. eine Flasche oder Tube, von Fig. 1, wird durch zwei praktisch gleichgrosse Abschnitte 11 und 13 gebildet, die einander gegenüberliegen. Die Grenze zwischen den Abschnitten 11 und 13 wird durch die Formtrennebene 15 gebildet. Der Abschnitt 11 besteht z.B. aus relativ hartem Kunststoff und der Abschnitt 13 z.B. aus relativ weichem Kunststoff. Es können aber auch andere Materialeigenschaften verschieden sein.

Beim zweiten Ausführungsbeispiel von Fig. 2 besitzt der Formkörper zwei einander gegenüberliegende Abschnitte aus hartem Material. Diese Abschnitte 11 sind durch weiche Abschnitte 13 miteinander verbunden.

Beim dritten Ausführungsbeispiel von Fig. 3 ist eine Vielzahl von Abschnitten 11 aus hartem Material und 13 aus weichem Material vorgesehen. Die Abschnitte 11 aus hartem Material sind breiter als die Abschnitte 13 aus weichem Material. Ein solcher Formkörper hat eine ausserordentlich hohe Formstabilität, lässt sich aber dennoch gut zusammenpressen.

Bei der Ausführungsform von Fig. 4 sind die Abschnitte 11 aus hartem Material relativ schmäler als die Abschnitte 13 aus relativ weichem Material.

Währenddem die Querschnitte der Formkörper gemäss der Figuren 1 und 2 oval sind, sind die Querschnitte bei den Hohlkörpern gemäss der Figuren 3 und 4 rund. Es ist aber dem Fachmann ohne weiteres ersichtlich, dass noch eine Vielzahl von Abänderungen möglich sind ohne vom Grundgedanken der Erfindung abzuweichen. Als Materialien für die Hohlkörper eignen sich insbesondere PET.

## Ansprüche

1. Im Extrusionsblasverfahren hergestellter Hohlkörper, insbesondere Flasche, aus Kunststoff, dadurch gekennzeichnet, dass der Hohlkörper aus mindestens einem langsverlaufenden Abschnitt (11) aus einem ersten Material und mindestens einem längsverlaufenden Abschnitt (13) aus einem zweiten Material besteht.

2. Hohlkörper nach Anspruch 1, dadurch gekennzeichnet, dass das erste Material relativ hart und dass das zweite Material relativ weich ist.

3. Hohlkörper nach Anspruch 1 oder 2, dadurch gekennzeichnet, dass zwei praktisch gleichgrosse Abschnitte (11, 13) vorgesehen sind, die einander gegenüberliegen.

4. Hohlkörper nach einem der Ansprüche 1 bis 3, dadurch gekennzeichnet, dass die Abschnitte (11, 13) bei der Formtrennebene (11) aneinandergrenzen.

5. Hohlkörper nach Anspruch 2, dadurch gekennzeichnet, dass eine Vielzahl von Abschnitten (11, 13) aus erstem und zweitem Material vorgesehen sind.

6. Hohlkörper nach Anspruch 5, dadurch gekennzeichnet, dass im Querschnitt die Abschnitte (11) aus relativ hartem Material schmäler sind als die Abschnitte (13) aus relativ weichem Material.

7. Hohlkörper nach Anspruch 5, dadurch gekennzeichnet, dass im Querschnitt die Abschnitte (11) aus relativ hartem Material breiter sind als die Abschnitte (13) aus relativ weichem Material.

8. Hohlkörper nach einem der Ansprüche 1 bis 7, dadurch gekennzeichnet, dass er einen etwa ovalen Querschnitt aufweist.

9. Hohlkörper nach einem der Ansprüche 1 bis 7, dadurch gekennzeichnet, dass er einen etwa runden Querschnitt aufweist.

Fig.1

Fig.2

Fig.3

Fig.4